Europäisches Patentamt

(19) European Patent Office

Office européen des brevets

(11) Veröffentlichungsnummer: **0 146 499**
A2

(12) ## EUROPÄISCHE PATENTANMELDUNG

(21) Anmeldenummer: **84810548.2**

(22) Anmeldetag: **12.11.84**

(51) Int. Cl.⁴: **C 08 J 9/30,** C 08 J 9/14, C 08 L 61/06

(30) Priorität: **15.11.83 GB 8330444**

(71) Anmelder: **CIBA-GEIGY AG, Postfach, CH-4002 Basel (CH)**

(43) Veröffentlichungstag der Anmeldung: **26.06.85 Patentblatt 85/26**

(84) Benannte Vertragsstaaten: **BE DE FR GB NL**

(72) Erfinder: **Curtis, William David, Dr., 18 Haslingfield Road, Harlton Cambridge CB3 7ER (GB)**

(54) **Verfahren zur Herstellung von Phenolharzschaumstoffen.**

(57) Phenolharzschaumstoff wird dadurch hergestellt, dass man ein Gemisch mit einem pH-Wert von mehr als 7 bereitet, das ein phenolisches Resol, Alkali und ein Lacton, einen Ester oder ein cyclisches aliphatisches Carbonat zur Härtung der henolischen Resole unter alkalischen Bedingungen enthält, dieses Gemisch entweder durch Zufuhr von Luft oder Einarbeitung eines Leichtflüchtigen flüssigen Treibmittels zum Schäumen bringt und den Schaum erhärten lässt.

Die sich dabei bildenden Schaumstoffe sind feuerfeste Isoliermaterialien, welche sich insbesondere für die Anwendung *in situ* eignen.

## Verfahren zur Herstellung von Phenolharzschaumstoffen

Die vorliegende Erfindung betrifft ein Verfahren zur Herstellung von geschäumten Phenol/Aldehydkondensationsprodukten unter alkalischen Bedingungen und die mittels des neuen Verfahrens hergestellten Schaumstoffe, welche weniger korrosiv und leichter zu handhaben sind als herkömmliche geschäumte Phenol/Aldehydkondensationsprodukte.

Phenol/Aldehydkondensationsschaumstoffe, im allgemeinen Phenolharzschaumstoffe genannt, werden üblicherweise aus phenolischen Resolen, die ihrerseits mittels Kondensation eines Phenols mit einem Aldehyd unter alkalischen Bedingungen erzeugt werden, hergestellt. Das Aushärten erfolgt durch Zusatz einer Säure, typischerweise p-Toluolsulfonsäure, Phosphorsäure oder Schwefelsäure. Die Schaumbildung wird entweder durch Einarbeitung einer leichtflüchtigen Flüssigkeit oder eines Materials erreicht, das beim Kontakt mit dem sauren Härter ein Gas bildet. Gewöhnlich wird auch ein Tensid zur gleichmässigeren Verteilung des Treibmittels und somit zur Erzeugung eines Schaumstoffs mit einheitlicherer Zellgrösse eingearbeitet.

Phenolharzschaumstoffe sind hart und weisen gegenüber anderen Hartschaumstoffen zahlreiche vorteilhafte Eigenschaften auf. So sind sie insbesondere wärmestabil, besitzen gute Feuerfestigkeit, erzeugen bei Flammenkontakt keinen übermässigen Rauch und weisen gute chemische Widerstandsfähigkeit sowie gute elektrische Eigenschaften auf. Aus verschiedenen Gründen wurden sie jedoch für das in-situ-Aufschäumen nicht weithin verwendet, wahrscheinlich

- 2 -

insbesondere wegen der Schwierigkeit, eine gleichmässige Mischung vor dem Aufschäumen zu erhalten. Eine grosse Menge Harz muss gleichmässig mit einer kleinen Menge des sauren Härters zur Erzielung eines einheitlichen Schaumstoffs vermischt werden. Das Harz hat jedoch eine vergleichsweise hohe Viskosität, wohingegen der Härter sehr dünnflüssig ist. Dies hat zur Folge, dass die Vermischung nicht leicht vonstatten geht, vor allem innerhalb der kurzen zur Verfügung stehenden Zeit, während die Aushärtung beginnt, sobald das Harz und der Härter miteinander in Berührung kommen. Derartige Probleme kann man zwar dadurch lösen, dass man sehr effiziente Mischer einsetzt, aber da solche Geräte sehr teuer und auch sperrig sind, werden sie gewöhnlich nur innerhalb des Fabrikgeländes eingesetzt.

Es wurde nun gefunden, dass es bei Härtung des Phenolharzes unter alkalischen Bedingungen möglich ist, Harze und Härter zu benutzen, die ähnliche Viskositätswerte aufweisen und in ähnlichen Volumenanteilen verwendet werden, so dass die in-situ-Bildung von Phenolharzschaumstoffen in einem wesentlich einfacheren Verfahren durchgeführt werden kann. Zur Härtung von phenolischen Harzen unter alkalischen Bedingungen verwendbare Mittel sind u.a. Ester, Lactone und organische Carbonate.

Es existieren bereits Vorrichtungen für die in-situ-Aufschäumung, worin zwei Flüssigkeiten ähnlicher Viskosität vermischt werden. Derartige Vorrichtungen sind für den Gebrauch mit Polyurethanen vorgesehen. Bei Anwendung des neuen Verfahrens können solche Vorrichtungen zur Herstellung von Phenolharzschaumstoffen eingesetzt werden.

Ein weiterer Vorteil des neuen Verfahrens ist die ausgeprägte Verringerung der Korrosion in Rohrleitungen etc. aufgrund der Abwesenheit von starken Säuren. Dies macht die Verwendung billigerer Materialien wie Weichstahl im Gegensatz zu teuererem Material wie Edelstahl möglich. Ein weiterer Vorteil des neuen Verfahrens ist die Möglichkeit, luftgeschäumten Phenolharzschaumstoff herzustellen. Bisher wurden alle Phenolharzschaumstoffe mittels

- 3 -

einer leichtflüchtigen Flüssigkeit oder durch Freisetzung eines Gases aufgeschäumt, wohingegen das Aufschäumen durch Zufuhr von Luft nicht möglich war. Um luftgeschäumten Schaumstoff erfolgreich herstellen zu können, ist es von wesentlicher Bedeutung, dass eine rasche Gelierung eintritt, sobald der Härter und die Luft mit dem Harz vermischt werden. Die Härtung von Phenolharzen mit Säuren ist jedoch ein exothermer Vorgang. Daher wird zur Erzielung der für luftgeschäumten Schaumstoff notwendigen schnellen Härtungsgeschwindigkeit eine grosse Menge an Wärme exotherm produziert. Es ist praktisch unmöglich, diese exotherme Wärmebildung unter Kontrolle zu bringen, so dass sich luftgeschäumte Phenolharzschaumstoffe in der Praxis nicht durchsetzen konnten. Die Härtung von Phenolharzschaumstoffen unter alkalischen Bedingungen ist kein derartiger exothermer Vorgang, so dass eine schnelle Härtung ohne die mit der Anwendung eines schnell härtenden sauren Systems verbundenen Risiken erzielbar ist.

Die bei der Härtung unter alkalischen Bedingungen auf ein Mindestmass verringerte exotherme Wärmebildung führt zu einem weiteren Vorteil. Bei den säurehärtenden Systemen ist der bei der Härtung freigesetzte Wärmebetrag von der Lagerung des Harzes abhängig, wobei frisch hergestellte Harze viel mehr Wärme als gelagerte entwickeln. Da die Anteile an Treibmittel und Härter sorgfältig je nach der Reaktionsfähigkeit des Harzes zur Erzielung eines Schaumstoffes mit den gewünschten Eigenschaften ausgewählt werden müssen, ist es folglich notwendig, jede Harzcharge unmittelbar vor dem Aufschäumen auszutesten, um ihre Reaktionsfähigkeit zu ermitteln. Derartige Untersuchungen sind jedoch beim neuen Verfahren überflüssig, da hierbei die exotherme Wärmeentwicklung beim Härten nur von untergeordneter Bedeutung ist.

Das Härten von Phenolharzen unter alkalischen Bedingungen ist an sich nicht neu, doch wird die Verwendung solcher Härtungsmethoden zur Bildung von Schaumstoffen als neu betrachtet. Aus GB-A-1 374 332 sind alkalische Phenolharze bekannt, welche durch Zusatz von Formamid zusammen mit einem Formiat, Lacton, Borsäure oder einem Alkalimetalldichromat

- 4 -

gehärtet werden. Solche Zusammensetzungen werden als nütz-liche Klebemittel, insbesondere in Spanplatten, bezeichnet, welche den Vorteil aufweisen, dass sie bei erhöhter Temperatur schnell aushärten und bei Umgebungstemperatur eine lange Topfzeit haben.

In GB-A-2 059 972A ist die Verwendung von Lactonen, insbesondere $\gamma$-Butyrolacton, als Härter für Phenolharze be-schrieben, welche zusammen mit körnigem, feuerfestem Mate-rial bei der Herstellung von Giessereiformen und -kernen eingesetzt werden. Der Einsatz solcher Härter soll harte Kerne ergeben, ohne dass die Einarbeitung von bekanntermassen in der Giessereitechnik nachteiligen Aminkatalysatoren nötig wäre.

Aus US-A-4 357 457 sind Lösungen des Tetramethylol-derivats von 4,4'-Isopropylidendiphenol in äthylen- oder propylencarbonathaltigem Wasser bekannt, welche zur Schaumstofferzeugung oder als Bindemittel bei der Herstellung akustischer Formerzeugnisse eingesetzt werden. Die Härtung dieser Zusammensetzungen wird durch den Zusatz von sauren Substanzen erzielt, wobei das Carbonat nur als Treibmittel dient.

Gegenstand der vorliegenden Erfindung ist demnach ein Verfahren zur Herstellung von Phenolharzschaumstoffen, welches dadurch gekennzeichnet ist, dass man ein Gemisch mit einem pH-Wert von mehr als 7, insbesondere im Bereich von 8 bis 12, bereitet, das ein phenolisches Resolharz, ein Alkali oder ein Lacton, einen Ester oder ein cyclisches aliphatisches Carbonat zur Härtung der phenolischen Resole unter alkalischen Bedingungen enthält, dieses Gemisch zum Schäumen bringt und aushärten lässt. Ein weiterer Gegen-stand der Erfindung sind mittels des erfindungsgemässen Verfahrens hergestellte Schaumstoffe.

Das Aufschäumen der Harz/Härtermischung kann gegebenenfalls durch Zuführung von Luft oder vorzugsweise durch Einarbeitung einer leichtflüchtigen Flüssigkeit als Treib-mittel erfolgen. Bevorzugt enthält die Mischung des wei-teren ein Tensid zur Erzielung einer homogenen Emulsion bei

- 5 -

Verwendung eines Treibmittels bzw. zur Stabilisierung des ungehärteten Schaumstoffs, wenn Luft in die Harz/Härtermischung eingebracht wird. Das Aufschäumen kann unter atmosphärischem oder verringertem Druck stattfinden.

Die erfindungsgemäss verwendeten phenolischen Resole sind solche auf der Grundlage von gegebenenfalls substituierten Phenolen, wie m-Kresol, 3,5-Xylen-1-ol, Resorcin und deren Gemischen,mit einem Aldehyd oder Aldehydgemisch. Bevorzugt werden die Resole aus Phenol und Formaldehyd hergestellt, wobei letzteres als solches oder in Form von Paraformaldehyd verwendet wird. Das Molverhältnis von Phenol: Aldehyd ist typischerweise 1:1,0 - 3,0, vorzugsweise 1:1,5 - 2,6.

Der Kondensationsgrad des Resols wird am günstigsten unter Bezugnahme auf den Feststoffgehalt (d.h. auf den Anteil an Substanzrückstand nach 3-stündigem Erhitzen des Resols auf $120^{o}$C in Gewichtsprozenten) und auf die Viskosität angegeben. Die erfindungsgemäss verwendeten Resole haben typischerweise einen Feststoffgehalt im Bereich zwischen 40 und 80% und eine Viskosität im Bereich zwischen 0,05 - 10 Pa.s bei $25^{o}$C. Es versteht sich, dass der Feststoffgehalt und die Viskosität eines Resols miteinander korrelieren. Manchmal kann es sich als notwendig erweisen, zur Erhöhung oder Erniedrigung des Feststoffgehalts Wasser aus dem Resol zu entfernen oder hinzuzufügen, um ein Harz einer jeweils gewünschten Viskosität zu erhalten.

Der pH-Wert des Gemischs wird durch Zusatz von Alkali, gewöhnlich Natrium- oder Kaliumhydroxyd, eingestellt. Das Alkali kann in das Harz in fester Form oder als wässrige Lösung mit einem Gehalt an 25-60 Gew.-%, bezogen auf das Gewicht der Lösung, eingearbeitet werden. Die Frage, ob das Alkali am besten in fester Form oder als Lösung hinzugefügt werden soll, hängt vom Feststoffgehalt des Harzes und seiner Viskosität ab. Die Entscheidung darüber wird dem Fachmann auf dem Gebiet der Aufschäumung von phenolischen Resolen nicht schwerfallen. Der Anteil an eingesetztem Alkali liegt typischerweise im Bereich von 15-60 Gew.-%

- 6 -

(100% Feststoffbasis), bezogen Harzfeststoffe. Der optimale Anteil wird in jedem besonderen Fall von der Art des Resols, seiner Herstellungsweise, der Art des Härters und des Alkalis abhängig sein. Typischerweise werden für eine 50%ige wässrige Lösung von zu einem phenolischen Resol mit einem Feststoffgehalt von ca. 80% hinzugefügtem Kaliumhydroxyd 15-40, insbesondere 20-35 Gew.-%, des Hydroxyds verwendet.

Typische Lactonhärter schliessen Propiolacton, Butyrolacton, Caprolacton, Valerolacton oder Gemische daraus ein. Gegebenenfalls zum Einsatz gelangende Ester sind u.a. Glyzerin-1,3-diacetat, Glyzerintriacetat, Methylformiat, Aethylformiat und Aethylenglykoldiacetat. Bevorzugte gegebenenfalls verwendbare cyclische aliphatische Carbonate weisen 3 - 6 Kohlenstoffatome auf, wobei Aethylen- und Propylencarbonat besonders bevorzugt sind. Gewünschtenfalls können Gemische aus zwei oder mehr unterschiedlichen Sorten dieser Härter eingesetzt werden, wie ein Gemisch eines Esters mit einem Lacton oder Carbonat. Der Anteil an solchen Härtern liegt gewöhnlich im Bereich von 60 - 100 Gewichtsteilen, bezogen auf 100 Gewichtsteile der Harzfeststoffe, wobei 65 - 75 Gewichtsteile bevorzugt sind.

Als erfindungsgemässes Treibmittel kommt eine leichtflüchtige Flüssigkeit in Betracht, d.h. eine solche mit einem Dampfdruck, welcher dem bei der Härtetemperatur des Gemisches vorherrschenden Druck entspricht oder darüber liegt. Derartige Flüssigkeiten sind u.a. gegebenenfalls fluorierte und/oder chlorierte Kohlenwasserstoffe, Alkohole, Ketone und Aldehyde. Bevorzugte Treibmittel haben einen Siedepunkt im Bereich von -30°C bis +48°C, insbesondere Fluorkohlenstoffe mit einem Siedepunkt innerhalb dieses Bereiches, wie Trichlorfluormethan, 1,1,2-Trichlor-1,2,2-trifluoräthan und Dichlordifluormethan. Flüssigkeiten mit einem höheren Siedepunkt bei atmosphärischem Druck können erfolgreich durch Verringerung des herrschenden Druckes eingesetzt werden.

Der Anteil solcher vewendeter Treibmittel wird von den im fertigen Schaumstoff erwünschten Eigenschaften abhängen, liegt aber gewöhnlich im Bereich von 15 - 60 Gewichtsteilen, bezogen auf 100 Gewichtsteile Harzfeststoffe.

Das Aufschäumen durch Luft ist durch jede übliche Methode zur Herstellung von luftgeschäumtem Schaumstoff erzielbar. Gewöhnlich wird dies entweder durch Hochgeschwindigkeitsrühren, wobei Luft in das Gemisch eingerührt wird, oder durch Verwendung von Pressluft, wobei die Harz- oder Härterkomponente durch ein Rohr mit Glaskügelchen oder anderem Füllmaterial hindurchgedrückt wird, und Vereinigung des so entstehenden Schaums mit der anderen Komponente zur Stabilisation erreicht.

Als in dem erfindungsgemässen Verfahren geeignete Tenside kommen u.a. Alkoxysilane, Polysilylphosphonate, Silikon/Aethylenoxyd/Propylenoxydcopolymere, Polydimethylsiloxane, Polydimethylsiloxan/Polyoxyalkylencopolymere, Alkalimetallsalze alkoxylierter langkettiger Alkoholsulfate und jedes andere als nützlich bei der Herstellung von Phenolharzschaumstoffen bekannte Tensid in Betracht. Im einzelnen bevorzugte Tenside sind die Dimethylsiloxan/Polyoxyalkylenblockcopolymere, die bei der Union Carbide Corporation unter der Bezeichnung "L-5420" und "L-5340" sowie von Dow Corning Corporation unter der Bezeichnung "DC-193" und "DC-195" erhältlich sind, langkettige Natriumäthoxyalkoholsulfate sowie polyoxyalkylierte langkettige Alkylphenole wie polyoxyäthyliertes Nonylphenol. Gewöhnlich liegt der Anteil des eingesetzten Tensids im Bereich von etwa 0,25 - 30 Gewichtsteilen, bezogen auf 100 Gewichtsteile Harzfeststoff, wobei der bevorzugte Anteil im Bereich von 1 - 15 Teilen liegt.

Das Aushärten der Mischung kann sowohl bei Umgebungsals auch bei erhöhter Temperatur erfolgen, je nach definierter Art der Komponenten und Art des benötigten Schaumstoffes. Das Harz/Härtergemisch ist sowohl in Form eines Schaums als auch einer treibmittelhaltigen Emulsion auf eine Oberfläche bei Umgebungs- oder erhöhter Temperatur, gewöhnlich bis zu einer Maximaltemperatur von etwa 80°C aufbringbar. Die

0146499

Auswahl geeigneter Mischungsbestandteile, welche mit der Temperatur der Oberfläche, auf die sie aufgebracht werden, verträglich sind, ermöglicht die Herstellung von innerhalb etwa 2 Minuten aushärtender bzw. aufschäumender und härtender Gemische. Das Auswählen geeigneter Stoffe zur Einhaltung der speziellen Erfordernisse gehört zu den Routinemassnahmen der Fachleute in der Technik des Aufschäumens von phenolischen Resolen.

Manchmal ist es zur Erzielung einer Harz- und Härtermischung mit sehr ähnlicher Viskosität wünschenswert, das Resol in zwei Portionen aufzuteilen, wobei die eine Portion stark alkalisch und die andere unter neutralen oder ganz schwach sauren Bedingungen gehalten wird. Der Härter wird zu dieser zweiten Portion hinzugefügt, wobei jedoch das Aushärten nur langsam vonstatten geht, da keine starken alkalischen Bedingungen herrschen. Derartig hergestellte Gemische sind für Zeiträume von mehreren Wochen bei Umgebungstemperaturen stabil. Die alkalische Portion ist ebenfalls bis zur Vermischung mit dem Härter sehr stabil. Gegebenenfalls verwendetes Tensid und Treibmittel können sowohl jeweils einer oder auch beiden Portionen hinzugefügt werden.

Die Erfindung soll nun durch die folgenden Beispiele erläutert werden. Es sind darin alle Anteile in Gewicht angegeben, sofern nichts anderes vermerkt ist.

## BEISPIEL 1

Ein aus Phenol und Formaldehyd im Molverhältnis von 1,0:1,6 hergestelltes phenolisches Resol mit einem Feststoffgehalt von 78,5% und einer Viskosität von 6,5 Pa s bei 25°C (26,92 Teile) wird mit einer Lösung von Kaliumhydroxyd (26,92 Teile) in Wasser (46,16 Teile) vermischt. Man erhält eine stabile alkalische Lösung (Bestandteil A).

Bei einer zweiten Portion desselben Harzes (53,84 Teile) wird der pH-Wert durch Hinzutropfen von p-Toluolsulfonsäure auf 6,5 eingestellt, und sie wird danach mit Propylencarbonat (46,16 Teile) vermischt. Dies ergibt den Bestandteil B.

Bestandteil A (50 Teile) wird mit dem von Dow Corning Corporation unter der Bezeichnung "DC 193" (3,0 Teile) erhältlichen Polydimethylsiloxanpolyoxyalkylenblockcopolymer und Trichlorfluormethan (15 Teile) zu einer glatten, gleichmässigen Emulsion vermischt. Daraufhin wird der Bestandteil B (50 Teile) hinzugegeben und die Mischung 5 Sekunden lang gerührt. Man erzielt ein gleichförmiges Gemisch, welches in eine auf $50^{\circ}C$ vorgeheizte Form gegossen wird. Unmittelbar danach setzt die Schaumbildung ein. Das Aufsteigen ist nach 60 Sekunden beendet, und der Schaumstoff ist nach 90 Sekunden klebfrei.

Die nähere Betrachtung dieses Schaumstoffs zeigt eine mittlere Härte mit einer gewissen Elastizität und eine gleichmässige, mittlere offenzellige Struktur. Seine Dichte beträgt 58,3 $kg/m^3$.

BEISPIEL 2

Ein aus Phenol und Formaldehyd im Molverhältnis 1,0:2,0 hergestelltes Resol mit einem Feststoffgehalt von 48,8% und einer Viskosität von 0,27 Pa s bei $25^{\circ}C$ (40,54 Teile) wird mit einer Lösung aus Kaliumhydroxyd (8,54 Teile) und Wasser (0,92 Teile) verrührt. Man erhält den Bestandteil C.

Eine zweite auf den pH-Wert von 6,3 eingestellte Portion desselben Harzes (26,92 Teile) wird in Propylencarbonat (23,08 Teile) aufgelöst. Man erhält den Bestandteil D.

Der Bestandteil C (100 Teile) wird bei $25^{\circ}C$ mit DC 193 (6 Teile) und Trichlorfluormethan (30 Teile) vermischt und 30 Sekunden lang gerührt. Dieses Gemisch wird mit Bestandteil D (100 Teile) bei $25^{\circ}C$ versetzt und das Rühren weitere 15 Sekunden lang fortgesetzt. Die Mischung wird in eine auf $46^{\circ}C$ vorgeheizte Form gegossen. Ein Schaumstoff bildet sich und wird innerhalb von 60 Sekunden klebfrei. Das Produkt ist ein feinzelliger, gleichmässiger, ziemlich elastischer Schaumstoff, der beim Stehenlassen beträchtlich an Elastizität verliert. Er hat eine Dichte von 99,7 $kg/m^3$ und eine offene Zellstruktur.

BEISPIEL 3

Ein aus Phenol und Formaldehyd im Molverhältnis

- 10 -

1,0:2,0 hergestelltes Resol mit einem Feststoffgehalt von 43%, einem Natriumhydroxydanteil von 8,5% und einer Viskosität von 0,23 Pa s bei 25°C (46,0 Teile) wird mit einer Lösung aus Kaliumhydroxyd (3,0 Teile) in Wasser (1,0 Teil) verrührt. Das Gemisch wird auf 25°C abgekühlt und ergibt den Bestandteil E.

Bestandteil E (100 Teile) wird bei 25°C mit DC 193 (6 Teile) und Trichlorfluormethan (30 Teile) vermischt und 30 Sekunden lang gerührt. Der Bestandteil D (100 Teile) wird bei 25°C hinzugefügt und das Mischen weitere 10 Sekunden lang fortgesetzt. Unmittelbar darauf setzt das Aufschäumen ein, und der Schaumstoff ist nach 30 Sekunden klebfrei. Das Produkt ist ein dichter, feinzelliger rosa Schaumstoff mit einer Dichte von 219,2 kg/m$^3$.

BEISPIEL 4

Das zur Herstellung des Bestandteils E benutzte Resol (46,0 Teile) wird mit einer Lösung von Natriumhydroxyd (2,2 Teile) in Wasser (1,8 Teile) vermischt. Man erhält den Bestandteil F.

Bestandteil F (100 Teile) wird bei 25°C mit Trichlorfluormethan (30 Teile) und DC 193 (6 Teile) vermischt und daraufhin mit dem Bestandteil D (100 Teile) versetzt. Nachdem weitere 5 Sekunden lang gerührt wurde, beginnt die Mischung zu schäumen und wird nach 42 Sekunden klebfrei. Die Temperatur im Inneren dieses Schaumstoffs zeigt ein Maximum von 37°C nach 3 1/2 Minuten. Der so erhaltene Schaumstoff ist dicht und feinzellig und weist eine Dichte von 269,9 kg/m$^3$ auf.

BEISPIEL 5

Ein aus Phenol und Formaldehyd im Molverhältnis 1,0:1,6 hergestelltes phenolisches Resol mit einem Feststoffgehalt von 78,5% und einer Viskosität von 6,5 Pa s bei 25°C wird auf den pH-Wert von 6,2 eingestellt. Eine Probe davon (107,68 Teile) wird in Caprolacton (92,32 Teile) aufgelöst. Man erhält den Bestandteil G.

Bestandteil A (100 Teile) wird bei 25°C mit DC 193 (6 Teile) und Trichlorfluormethan (30 Teile) vermischt und

- 11 -

sodann der Bestandteil G (100 Teile) bei 25°C hinzugefügt. Die Mischung wird noch 15 Sekunden lang gerührt und dann in eine auf 50°C vorgeheizte Form gegossen, worauf die Schaumbildung einsetzt. Das Aufschäumen ist nach 5 Minuten beendet, und der Schaumstoff ist nach 19 Minuten klebfrei. Er ist gleichmässig grobzellig und weist eine Dichte von 111,2 kg/m$^3$ auf.

BEISPIEL 6

Das zur Herstellung von Bestandteil G verwendete phenolische Resol (107,68 Teile) wird in Propylencarbonat (46,16 Teile) und Caprolacton (46,16 Teile) aufgelöst. Man erhält den Bestandteil H.

Bestandteil H (100 Teile) bei 25°C, DC 193 (6 Teile) sowie Trichlorfluormethan (30 Teile) werden 15 Sekunden lang gerührt, wonach der Bestandteil A (100 Teile) bei 25°C hinzugefügt wird. Die Mischung wird 10 Sekunden lang gerührt und dann in eine auf 50°C vorgeheizte Form gegossen. Das Aufschäumen setzt ein und ist nach 2 Minuten beendet. Der Schaumstoff ist nach 9 Minuten klebfrei. Das Produkt ist ein ziemlich grober Schaumstoff mit einer Dichte von 62,9 kg/m$^3$.

BEISPIEL 7

Das zur Herstellung des Bestandteils G verwendete phenolische Resol (107,68 Teile) wird in Caprolacton (46,16 Teile) und Glyzerin-1,3-diacetat (46,16 Teile) aufgelöst. Man erhält den Bestandteil I.

Bestandteil A (100 Teile) wird bei 25°C mit DC 193 (3 Teile), einem durch Kondensation von Nonylphenol mit 9 Mol Aethylenoxyd hergestellten nichtionischen Tensid (3 Teile) und 1,1,2-Trichlor-1,2,2-trifluoräthan (30 Teile) vermischt. Der Bestandteil I (100 Teile) wird bei 25°C hinzugefügt und das Gemisch 15 Sekunden lang gerührt und danach in eine auf 50°C vorgeheizte Form gegossen. Die Form wird 2 Stunden lang im Ofen bei 50°C belassen. Der gebildete Schaumstoff ist gleichmässig und feinzellig und weist eine Dichte von 105,0 kg/m$^3$ auf.

- 12 -

BEISPIEL 8

Bestandteil C (100 Teile) wird bei 25°C mit dem gemäss Beispiel 7 verwendeten Tensid auf der Basis von Nonylphenol (6 Teile) und Trichlorfluormethan (30 Teile) vermischt und 30 Sekunden lang verrührt. Der Bestandteil D (100 Teile) wird bei 25°C hinzugegeben und das Rühren weitere 15 Sekunden lang fortgesetzt. Es bildet sich ein grober Schaum mit einer Dichte von 313,4 kg/m$^3$.

BEISPIEL 9

Der Bestandteil A (100 Teile) wird bei 25°C mit dem gemäss Beispiel 7 verwendeten Tensid auf der Basis von Nonylphenol (2 Teile) und 1,1,2-Trichlor-1,2,2-trifluor-äthan (30 Teile) vermischt und 20 Sekunden lang verrührt. Die Mischung wird mit dem Bestandteil I (100 Teile) bei 25°C versetzt und das Rühren noch 10 Sekunden lang fortgesetzt. Die Mischung wird in eine auf 50°C vorgeheizte Form gegossen und in einem Ofen mit einer Temperatur von 50°C gestellt. Das Produkt ist ein feinzelliger, gleichmässiger Schaumstoff mit einer Dichte von 189,9 kg/m$^3$.

BEISPIEL 10

Der Bestandteil A (100 Teile) wird bei 25°C mit dem gemäss Beispiel 7 verwendeten Tensid auf der Basis von Nonylphenol (2,3 Teile) und Trichlorfluormethan (40 Teile) vermischt und 15 Sekunden lang gerührt. Die Mischung wird mit dem Bestandteil D (100 Teile) bei 25°C versetzt und das Rühren weitere 15 Sekunden fortgesetzt. Das Gemisch steigt auf und wird innerhalb von 60 Sekunden klebfrei. Es entsteht ein dichter, feinzelliger Schaumstoff mit einer Dichte von 232,2 kg/m$^3$.

BEISPIEL 11

Ein aus Phenol und Formaldehyd im Molverhältnis 1,0:2,0 hergestelltes phenolisches Resol mit einem Feststoffgehalt von 48,1%, einem Natriumhydroxydgehalt von 9,3% und einer Viskosität von 0,051 Pa s bei 25°C (44,6 Teile) wird mit einer Lösung von Kaliumhydroxyd (2,7 Teile) in Wasser (2,7 Teile) verrührt und darauf auf 25°C abgekühlt. Man erhält den Bestandteil J.

Aethylencarbonat (15,85 Teile) und Natriumlaurylalkoholäthoxysulfat (1,22 Teile) werden in Wasser (32,93 Teile) gelöst. Man erhält den Bestandteil K.

Der Bestandteil K (50 Teile) wird mittels Pressluft durch einen Glaskügelchen enthaltenden Zylinder hindurchgedrückt, worauf ein Schaum ensteht, welcher sodann mit einem Spray des Bestandteils J (50 Teile) vermischt wird.

Die daraus resultierende Mischung geliert innerhalb von etwa 20 Sekunden und bildet einen stabilen Schaumstoff mit einer Nassdichte von 73,3 kg/m$^3$. Dieser wird bei Umgebungstemperatur getrocknet und ergibt einen feinzelligen stabilen Schaum mit einer Trockendichte von 25,9 kg/m$^3$.

## BEISPIEL 12

Ein aus 30% Phenol, 50% Monoisopropyl-, 15% Diisopropyl- und 5% Triisopropylphenolen sowie Formaldehyd im Molverhältnis 1,0:2,0 hergestelltes Resol mit einem Natriumhydroxydgehalt von 0,54%, einem Kaliumhydroxydgehalt von 11,59%, einem Feststoffgehalt von 53,32% und einer Viskosität von 2,084 Pa s bei 25°C stellt den Bestandteil L dar.

Propylencarbonat (11,76 Teile) und Natriumlaurylalkoholäthoxysulfat (0,98 Teile) werden in einer Mischung aus Wasser (29,41 Teile) und Glyzerindiacetat (7,84 Teile) gelöst. Dies ergibt den Bestandteil M.

Der Bestandteil M wird bei Hochgeschwindigkeit 1 Minute lang gerührt und ergibt einen mässig stabilen Schaum. Das Rühren wird unterbrochen und der Bestandteil L (50 Teile) hinzugefügt. Die Mischung wird 10 Sekunden lang kräftig gerührt und geliert unter Bildung eines festen Schaums innerhalb von weiteren 5 Sekunden. Das Produkt ist ein ziemlich grober, bräunlich rosa Schaumstoff mit einer Trockendichte von 47,9 kg/m$^3$.

## BEISPIEL 13

Ein aus Phenol und Formaldehyd im Molverhältnis 1,0:2,0 hergestelltes Resol (100 Teile) mit einem Natriumhydroxydgehalt von 0,85%, einem Kaliumhydroxydgehalt von 15,26%, einem Feststoffgehalt von 58,9% und einer Viskosität von 0,30 Pa s bei 25°C wird mit Trichlorfluormethan

- 14 -

(15 Teile) und DC 193 (4 Teile) vermischt. Die Mischung ergibt den Bestandteil N.

Der Bestandteil N (119 Teile) wird bei 700 UpM 30 Sekunden lang gerührt und danach Butyrolacton (30 Teile) hinzugegeben, wobei das Rühren noch 15 Sekunden lang fortgesetzt wird. Die Mischung wird in eine auf 50°C vorgeheizte Form gegossen und danach in einen Ofen mit einer Temperatur von 50°C gestellt. Der Schaum geliert innerhalb von 5 Minuten und ergibt einen sehr feinen, gleichmässigen Schaumstoff mit einer Trockendichte von 118,0 kg/m$^3$ und einem geschlossenen Zellgehalt von 79,0%.

## BEISPIEL 14

Der Bestandteil N (119 Teile) wird bei 700 Upm 30 Sekunden lang gerührt und Aethylenglykoldiacetat (30 Teile) hinzugefügt, wonach das Rühren weitere 15 Sekunden lang fortgesetzt wird. Die Mischung wird in eine auf 50°C vorgeheizte Form gegossen und sodann in einen Ofen mit einer Temperatur von 50°C gestellt. Das Produkt ist ein mittelgrober Schaumstoff mit einer Trockendichte von 80,8 kg/m$^3$.

0146499

- 15 -

<u>Patentansprüche</u>

1.      Verfahren zur Herstellung von Phenolharzschaumstoffen, welches dadurch gekennzeichnet ist, dass man ein Gemisch mit einem pH-Wert von mehr als 7 bereitet, welches
ein phenolisches Resol, ein Alkali und ein Lacton, einen
Ester oder ein cyclisches aliphatisches Carbonat zur Härtung
des phenolischen Resolharzes unter alkalischen Bedingungen
enthält,und die Mischung schäumen und aushärten lässt.

2.      Verfahren nach Anspruch 1, dadurch gekennzeichnet,
dass die Mischung einen pH-Wert im Bereich von 8 - 12
aufweist.

3.      Verfahren nach den Ansprüchen 1 oder 2, dadurch
gekennzeichnet, dass das Aufschäumen durch Zuführung von
Luft oder durch Einarbeitung einer leichtflüchtigen Flüssigkeit als Treibmittel erfolgt.

4.      Verfahren nach Anspruch 3, dadurch gekennzeichnet,
dass als leichtflüchtige Flüssigkeit ein gegebenenfalls
fluorierter und/oder chlorierter Kohlenwasserstoff, Alkohol,
Keton oder ein Aldehyd mit einem Siedpunkt im Bereich von
$-30^{o}C$ bis $+48^{o}C$ verwendet wird.

5.      Verfahren nach den Ansprüchen 3 oder 4, dadurch
gekennzeichnet, dass der Anteil an Treibmittel 15 - 60 Gewichtsteile, bezogen auf 100 Gewichtsteile an Harzfeststoffen, beträgt.

6.      Verfahren nach einem der vorstehenden Ansprüche,
dadurch gekennzeichnet, dass die Mischung zusätzlich 0,25 -
30 Gewichtsteile eines Tensids, bezogen auf 100 Gewichtsteile an Harzfeststoffen, enthält.

7.      Verfahren nach einem der vorstehenden Ansprüche,
dadurch gekennzeichnet, dass das Resol aus gegebenenfalls
substituiertem Phenol und einem Aldehyd im Molverhältnis
des Phenols zu Aldehyd von 1:1,5 - 2,6 hergestellt wird.

8.      Verfahren nach einem der vorstehenden Ansprüche,
dadurch gekennzeichnet, dass das Resol einen Feststoffgehalt im Bereich von 40-80% und eine Viskosität im Bereich
von 0,05-10 Pa s bei $25^{o}C$ aufweist.

9.      Verfahren nach einem der vorstehenden Ansprüche,

- 16 -

dadurch gekennzeichnet, dass der Härter Propio-, Butyro-, Capro- oder Valerolacton, Glyzerin-1,3-diacetat, Glyzerin-triacetat, Methyl- oder Aethylformiat, Aethylenglykoldiace-tat, Aethylen- oder Propylencarbonat ist.

10.     Verfahren nach Anspruch 9, dadurch gekennzeichnet, dass 60-100 Gewichtsteile Härter, bezogen auf 100 Gewichtsteile an Harzfeststoffen, zum Einsatz gelangen.

11.     Verfahren nach einem der vorstehenden Ansprüche, dadurch gekennzeichnet, dass das Resol vor dem Zumischen in zwei Portionen aufgeteilt wird, wobei die eine unter stark alkalischen Bedingungen und die andere, den Härter enthaltende, Portion unter neutralen oder ganz schwach sauren Bedingungen gehalten wird.

12.     Die nach dem Verfahren gemäss Anspruch 1 erhaltenen Phenolharzschaumstoffe.